Europäisches Patentamt

European Patent Office

Office européen des brevets

(19)

(11) Veröffentlichungsnummer : **0 472 899 B1**

(12) # EUROPÄISCHE PATENTSCHRIFT

(45) Veröffentlichungstag der Patentschrift :
08.03.95 Patentblatt 95/10

(51) Int. Cl.⁶ : **G01N 15/14,** G01N 21/85, G01N 21/53

(21) Anmeldenummer : 91112286.9

(22) Anmeldetag : 23.07.91

(54) **Photometrische Messeinrichtung.**

(30) Priorität : **01.08.90 DE 4024420**

(43) Veröffentlichungstag der Anmeldung :
**04.03.92 Patentblatt 92/10**

(45) Bekanntmachung des Hinweises auf die
Patenterteilung :
**08.03.95 Patentblatt 95/10**

(84) Benannte Vertragsstaaten :
**AT BE CH DE ES FR GB IT LI NL**

(56) Entgegenhaltungen :
**WO-A-88/09494**
**DE-A- 2 231 873**
**FR-A- 2 453 399**
**TM TECHNISCHES MESSEN Band 56, Nr. 7/8,**
**Juli/August 1989, Seiten 285-290; H. DANIGEL**
**et al.: "Faseroptisches Photometer für die**
**Chemie-Prozessmesstechnik"**
**P. Horowitz und W.Hill: "The art of electro-**
**nics", Cambridge University Press, 1989,**
**S.996,997**
**U. Tietze, C.Schenk:**
**"Halbleiterschaltungstechnik", Springer Ver-**
**lag, 1985, S.106-108**

(73) Patentinhaber : **BASF Aktiengesellschaft**
**Carl-Bosch-Strasse 38**
**D-67063 Ludwigshafen (DE)**

(72) Erfinder : **Ettmueller, Juergen**
**Gillergasse 9**
**W-6733 Hassloch (DE)**
Erfinder : **Eustachi, Wolfgang**
**Neugaertenring 2**
**W-6832 Hockenheim (DE)**
Erfinder : **Hagenow, Andreas**
**Trifelsstrasse 39**
**W-6520 Worms 21 (DE)**
Erfinder : **Polke, Reinhard, Dr.**
**Alemannenstrasse 9**
**W-6704 Mutterstadt (DE)**
Erfinder : **Raedle, Matthias, Dr.**
**Haalbergstrasse 18**
**W-6719 Weisenheim (DE)**
Erfinder : **Schaefer, Michael, Dr.**
**Dhauner Strasse 11a**
**W-6700 Ludwigshafen (DE)**

## Beschreibung

Die Erfindung betrifft eine photometrische Einrichtung zur Messung des Dämpfungsgrades bei der Lichtausbreitung in dispersen Systemen gemäß Oberbegriff des Anspruchs 1.

Das physikalische Prinzip einer photometrischen Messung ist die Bestimmung der von einer Lichtquelle zu einem Detektor gelangenden Lichtintensität in Abhängigkeit der Eigenschaften einer Probe, z.B. eines dispersen Systems. Je nachdem wie Lichtquelle, Probenvolumen und Detektor angeordnet und ausgeführt sind, ergeben sich verschiedene Abhängigkeiten des gemessenen Signals von der Streu- und Absorptionswirkung einer Lösung, Suspension oder Emulsion.

Die Lichtausbreitung bzw. ihre Dämpfung ist nämlich eine Funktion der dispersen Suspensionseigenschaften, genauer gesagt der spezifischen Streuung und Absorption. Innerhalb gewisser Grenzen läßt sich von den optischen Eigenschaften auf die allgemeinen dispersen Eigenschaften zurückschließen, was in vielen Fällen die Grundlage für eine Prozeßsteuerung liefern kann. Je nach Produkt ergeben sich unterschiedliche Anforderungen an die Art der Messung, was Geometrie und Größe des Meßvolumens sowie die verwendeten Wellenlängen angeht, z.B. Transmission mit Infrarot oder Remission mit Weißlicht.

Um als Meßverfahren für eine Prozeßsteuerung in Frage zu kommen, müssen folgende Voraussetzungen erfüllt sein:

das Probenvolumen muß ständig erneuert werden, am besten kontinuierlich, und

eine Verfälschung sowohl des Produktzustandes selbst, z.B. durch Probennahme als auch durch Verschmutzung, Absetzung oder Entmischung im Meßvolumen muß vermieden werden.

Die dispersen Systeme in Produktionsprozessen sind in der Regel hoch konzentriert, eine Verdünnung kommt normalerweise nicht in Frage. Unter diesen Randbedingungen muß eine photometrische Messung noch mit hinreichender Empfindlichkeit und Stabilität möglich sein.

Die Interpretation der dabei erhaltenen Meßsignale ist bisher weitgehend unbekannt. Die theoretischen Grundlagen für die Beschreibung der Lichtausbreitung in hochkonzentrierten, stark streuenden und stark absorbierenden Medien sind z.Z. noch unvollständig; sie behandeln allenfalls Teilaspekte. über die praktische Nutzung der Photometrie in derartigen Medien (z.B. fein gemahlene Farbpigmente in Konzentrationen um 20 %), die über die bekannten Anwendungen von kommerziellen Farbmeßgeräten, z.B. an Lackpigmenten, hinausgeht (die Remission kann an hellen Pigmenten im Purton gemessen werden, an dunklen nicht), ist wenig bekannt.

Beim Einsatz von Photometern an hochkonzentrierten (z.B. 20 %) Suspensionen dunkler Pigmente treten z.B. folgende Probleme auf:

Anordnungen, die noch durchströmt werden können, lassen sich nicht mehr durchstrahlen oder umgekehrt.

Die Geometrien, die für die Aufgabenstellung am aussagekräftigsten wären, stehen nicht zu Verfügung.

Das direkte übersprechen von Beleuchtung zu Empfänger überstrahlt das Nutzsignal um Größenordnungen.

Der optische Aufbau schwankt in seinen Übertragungseigenschaften um 10 % oder mehr (zwangsläufige Eigenschaft herkömmlicher Faserbündel).

Der Detektor driftet und rauscht im DC-Modus zu stark, gepulste Systeme sind zu unempfindlich.

Es sind bereits einige Systeme, auch faseroptische vorhanden, die für manche Prozesse eingesetzt werden können. Typischerweise sind es Systeme für großflächige Trübungs- oder Transmissionsmessung oder für Remissionsmessung im Sinne der kommerziellen Farbmeßgeräte.

So ist aus der DE-A-38 33 899 eine spektralfotometrische Einrichtung zur Fernmessung bekannt, bei der an Sonden, beispielsweise Küvetten, mittels Fenster Lichtwellenleiter von einem Meßlichtgerät und zu einem Restlicht verarbeitenden Gerät angeschlossen sind und zwischen einer als Meplichtquelle dienenden Blitzlampe und einem Strahlteiler ein antreibbares Filterrad angeordnet ist.

Es handelt sich hier um eine Verbesserung der üblichen Photometer, indem durch eine Pulsformung die Genauigkeit der Messung der Referenz und des Nutzsignales verbessert wird. Unbeachtet bleibt hier aber nach wie vor das Problem, daß für die Konstanz der Messung selbst keine Referenz existieren kann und viele störanfällige Grenzflächen im unkontrollierten Teil des Strahlengangs liegen. Die Verwendung eines gepulsten Systems bringt Nachteile bei der Detektion. Für den beschriebenen Zweck mag dies von untergeordneter Bedeutung sein, aber dies schließt einen Einsatz bei sehr dunklen, hochkonzentrierten Systemen aus.

Ebenso verhält es sich bei einer ähnlich aufgebauten, in der DE-A-34 12 620 beschrieben laseroptischen Anordnung für Einzelteilchen-Analysen von Dispersionen und Suspensionen zur Ermittlung des Dispergiergrades.

Weiterhin ist aus der FR-A-2 453 399 eine faseroptische Einrichtung zur Messung von Konzentrationen in Gasen, Dämpfen und Flüssigkeiten bekannt, bei der eine Sonde mit einem Lichtwellenleiterpaar in das Innere einer Küvette ragt. Darin werden die Enden der beiden Lichtwellenleiter, von denen der eine mit einer Lichtquelle und der andere sowie ein Referenzzweig mit Detektoren verbunden sind, von dem Meßvolumen getrennt. Die empfangenen Lichtsignale werden in rauscharmen Verstarkern verstärkt und das Differenzsignal zur Anzeige gebracht.

Weitere, in den Unteransprüchen angeführte Einzelheiten und Vorteile der erfindungsgemäßen Meßeinrichtung sind anhand in der Zeichnung dargestellter Ausführungsbeispiele nachfolgend beschrieben.

Es zeigen

Figur 1      den Aufbau der photometrischen Meßeinrichtung in einem Gesamtschema

Figuren 2-5      verschiedene Lichtwellenleiteranordnungen

Figur 6      die Schaltung des Gleichlichtdetektors

Figur 7      zusammengeführte Faserenden im Längsschnitt

Davon ausgehend liegt vorliegender Erfindung die Aufgabe zugrunde, eine photometrische Einrichtung zu entwickeln, mit der die dispersen Eigenschaften von dispersen Systemen mittels der Messung des Dämpfungsgrades bei der Lichtausbreitung in solchen Systemen bestimmt werden können. Dabei soll die Anzahl der optischen Grenzflächen möglichst gering sein und eine die bekannten Meßsysteme übertreffende Meßempfindlichkeit erreicht werden, so daß auch in hochkonzentrierten Systemen gemessen werden kann.

Die Aufgabe wurde durch eine photometrische Meßeinrichtung gemäß Anspruch 1 gelöst.

Der Artikel "Faseroptisches Photometer für die Chemie-Prozeßmeßtechnik" von H.Danigel et al. in TM Technisches Messen Band 56, Nr.7/8, Juli/August 1989, S.285-290 offenbart ein Photometer, bei dem Lichtleiter über eine Linsenoptik an die Küvette angeschlossen sind. Als Lichtquelle wird eine Xenon-Blitzlampe, als Lichtdetektor eine Photodiode mit Vor- und Hauptverstärker offenbart. Es wird darauf hingewiesen, daß der gesamte Meßbereich meistens größer ist, als dies eine festverdrahtete Elektronik erfassen kann. Abhängig von der Anwendung wird der Vorverstärker auf einen festen Wert eingestellt. Der Hauptverstärker ist verstellbar. Es wird explizit erwähnt, daß der Meßbereich des Systems nach unten durch das Rauschen der Detektoren und Verstärker begrenzt wird.

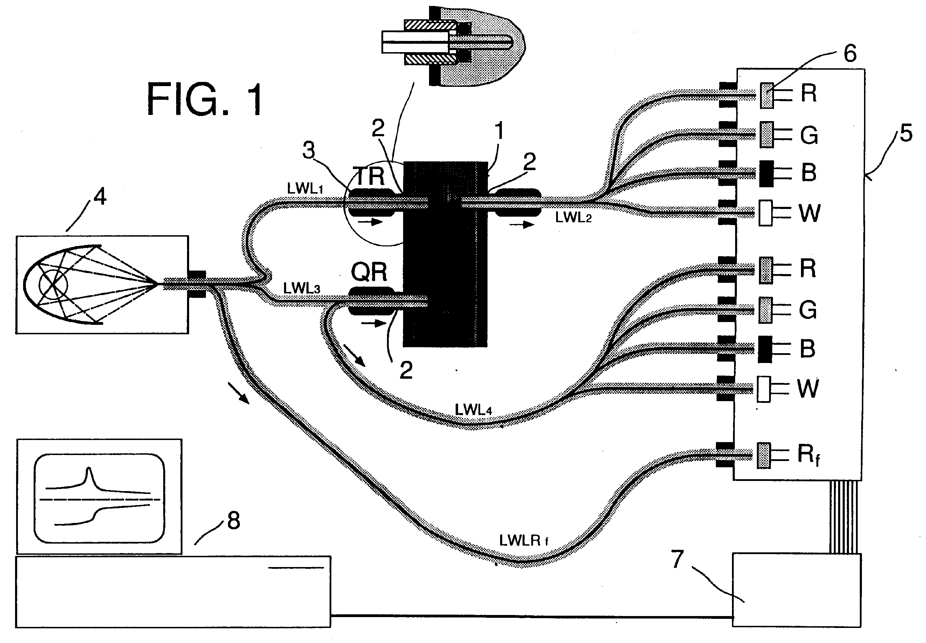

Bei der in Figur 1 schematisch dargestellten Meßanordnung sind drei Betriebsarten zu unterscheiden:

Transmission:      gemessen wird das durch das Meßvolumen hindurchtretende Licht.

Quasirückstreuung:      gemessen wird das Licht, welches infolge der diffusen Lichtausbreitung im dispersen Medium wieder in die Einstrahlrichtung rückgestreut wird, aber in eine andere Faser eintritt

Remission:      gemessen wird das Licht, welches an der medienseitigen Grenzfläche eines den Lichtwellenleiter abschließenden transparenten Flächenelements diffus reflektiert wird, aber in der Regel nicht der Reflex der Grenzfläche selbst.

Zentrales Teil der photometrischen Meßeinrichtung (Figur 1) ist eine durchströmbare Küvette 1, durch die eine Probe der zu untersuchenden Suspension fließen kann. Durch seitliche Öffnungen 2 in der Küvette ragen zur Erzeugung eines Meßsignals in den Innenraum die Enden eines sendenden und eines empfangenden Lichtwellenleiters (nachfolgend kurz LWL genannt) LWL 1 und LWL 2 für Transmissionsmessung sowie eines sendenden LWL 3 und empfangenden LWL 4 für Rückstreumessung bzw. Remissionsmessung. Hierzu sind die Faserenden der LWL in spezielle Stecker 3 eingeklebt, die in der eng tolerierten Bohrung 2 präzise geführt, jedoch längs verschiebbar bleiben. Sie werden mit Spannhülsen und O-Ringen fixiert und abgedichtet.

Die LWL sind sendeseitig mit einer nicht gepulsten Lichtquelle 4 und empfangsseitig mit einem Lichtdetektor 5 verbunden. Eine direkte LWL-Verbindung $R_f$ von der Lichtquelle zum Lichtdetektor dient als Referenzverbindung. Als Lichtquelle können eine stabilisierte Weißlichtquelle hoher Leuchtdichte, beispielsweise eine Xenon-Kurzbogenlampe mit elliptischem Reflektor, oder eine Halogenlampe mit Kondensor oder eine stabilisierte LED zur Anwendung kommen.

Die LWL bestehen aus hochwertigen, speziell geschützten Einzelfasern, um für die LWL-Verbindungen eine hohe optische Stabilität zu gewährleisten.

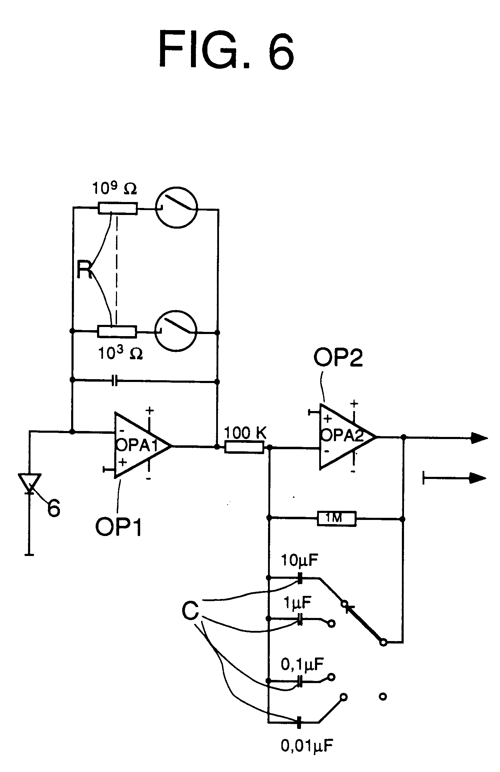

Der Lichtdetektor 5 ist ein in Figur 6 gezeigter Detektor mit einer Empfindlichkeit zwischen 20 pW/V und 2 mW/V bei 0 bis 13 V Ausgangsspannung und einem Rauschanteil kleiner 1 mV, dessen Eingang mit PIN-Dioden 6 als Empfänger für die LWL-Signale ausgestattet ist. Eine Wellenlängenselektion, z.B. für eine empfangsseitig mehrkanalige LWL-Anordnung in den Farben ROT, GRÜN, BLAU, WEISS, wird dadurch erhalten, daß PIN-Dioden mit aufgedampften Interferenzfiltern verwendet werden. Zum Anschluß der LWL an die Lichtquelle 4 und die Empfänger 6 werden handelsübliche SMA-Stecker verwendet.

Die Schaltung des Lichtdetektors 5 besteht aus zwei Verstärkungsstufen OP1 und OP2. Zunächst wird der Photostrom der PIN-Diode mit einem Operationsverstärker OPA1 als I/U Wandler verstärkt. Die Diode liegt zwischen dem invertierenden und dem nicht invertierenden Eingang des OPA1, wobei letzterer gegen Masse geschaltet ist. Der Photostrom fließt in dieser Schaltung über einen der 7 Meßbereichswiderstände R (1 kOhm bis 1 GOhm) zum Ausgang des OPA1, wobei an der Diode selbst so gut wie keine Spannung anliegt, was den temperaturabhängigen Dunkelstrom der Diode eliminiert. Die Ausgangsspannung ergibt sich dann direkt aus Photostrom mal Meßwiderstand. Diese Spannung wird in der zweiten Verstärkerstufe OP2 noch einmal um den Faktor 10 verstärkt, wobei im Gegenkopplungszweig Kapazitäten C für eine Begrenzung des Frequenzganges sorgen (aus 1 MOhm und 10 µF ergeben sich z.B. 0,1 Hz als obere Frequenz). Damit kann das Rauschen (100 $\mu V_{ss}$ bei 10 Hz) noch vermindert werden. Die Temperaturdrift liegt bei ca. 100 µV/K.

Der Lichtdetektor 5 ist über einen Analog/Digital-Wandler 7 mit einem Auswertegerät 8 verbunden. Dieses besteht aus einem Rechner, der entweder die A/D-Wandler als Steckkarten aufnimmt, oder über eine serielle (RS 232C) oder parallele (IEEE 488) Schnittstelle mit einer externen Einheit verbunden ist, und einer Software, die die Meßwerte erfaßt und auswertet. Die Auswertung besteht zunächst darin, den Spannungswert unter Berücksichtigung der eingestellten Empfindlichkeiten in eine Lichtstärke umzurechnen, diese wiederum unter Berücksichtigung der Beleuchtungsstärke in eine Dämpfung. Je nach Anwendung werden diese Werte dann mit Schwellenwerten bzw. mit Sollkurven verglichen, es werden Verhältnisse, Differenzen und Summen gebildet, und es werden die Signale verschiedener Sensoren an rechnerische Modelle des beobachteten Prozesses angepaßt. Die Ausgabe erfolgt in Form einer kontinuierlichen graphischen Anzeige, einer Abspeicherung der Daten auf File, und gegebenenfalls wird die Beurteilung des Signals auf eine einfache "Gut/Schlecht"-Aussage reduziert.

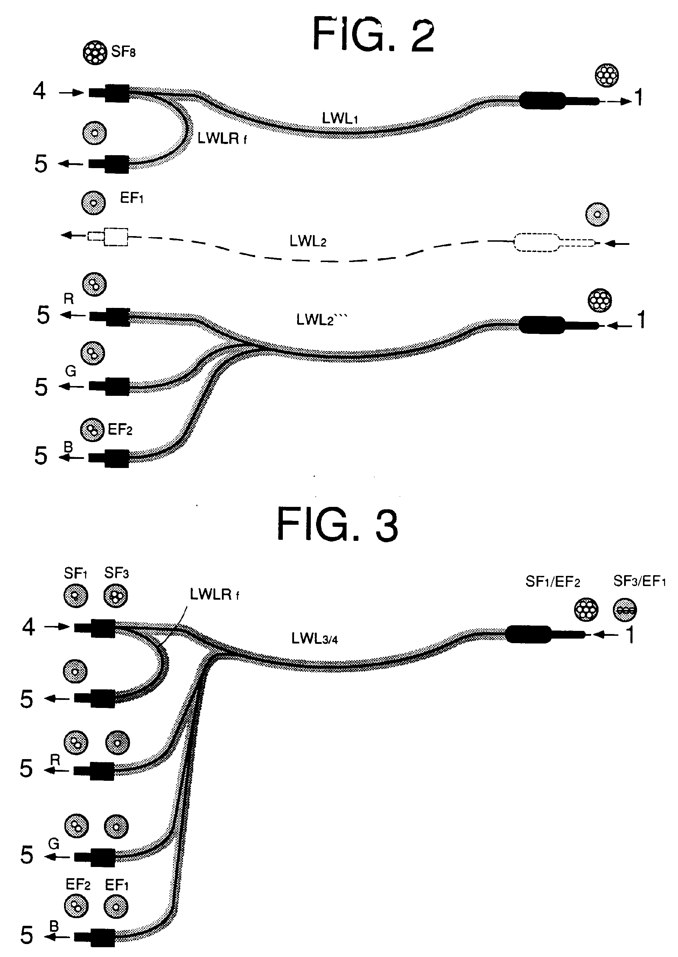

In den Figuren 2 bis 5 sind verschiedene LWL-Anordnungen schematisch dargestellt:

Die in Figur 2 gezeigte Anordnung für Transmissionsbetrieb weist sendeseitig einen LWL 1 mit 8 Einzelfasern $SF_8$ und einen Referenz-LWL mit einer Faser auf. Empfangsseitig ist ein einkanaliger LWL 2 mit einer Faser $EF_1$ (strichlierte Darstellung) oder eine dreikanalige LWL-Verbindung LWL 2''' mit jeweils zwei Fasern $EF_2$ vorgesehen.

Für einen Betrieb mit Quasirückstreuung ist in einer Öffnung 2 der Küvette das Ende eines LWL 3/4 mit sowohl einer Sendefaser $SF_1$ als auch einer oder mehreren Empfangsfasern $EF_2$ in ein- oder mehrkanaliger (Figur 3) Ausführung angeordnet.

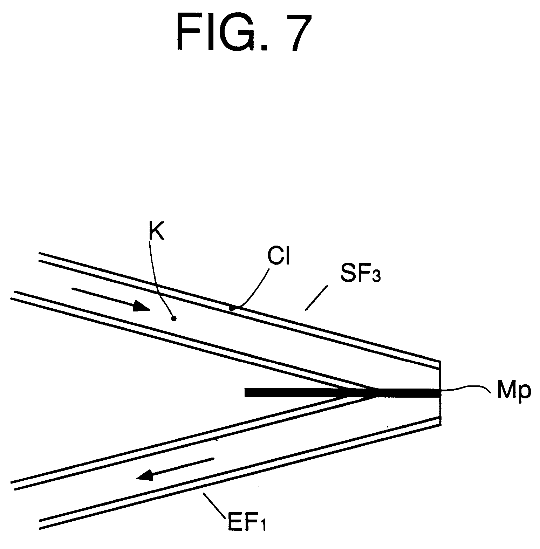

Eine weitere, ebenfalls in Figur 3 dargestellte Ausführungsform für diese Betriebsweise kann darin bestehen, daß paarweise nebeneinander drei Sendefasern $SF_3$ und drei Empfangsfasern $EF_1$ vorgesehen werden. Dabei ist es Zweckmäßig, die miteinander korrespondierenden, in die Küvette ragenden Fasernenden so anzuschleifen, daß Cladding C1 und Kern K der Fasern bis zu deren Mitte abgetragen sind und die dabei entstandenen quasitangentialen Schleifflächen unter Zwischenlage eines sehr dünnen Metallplättchens Mp (10-20 µm) paarweise anliegen (Figur 7).

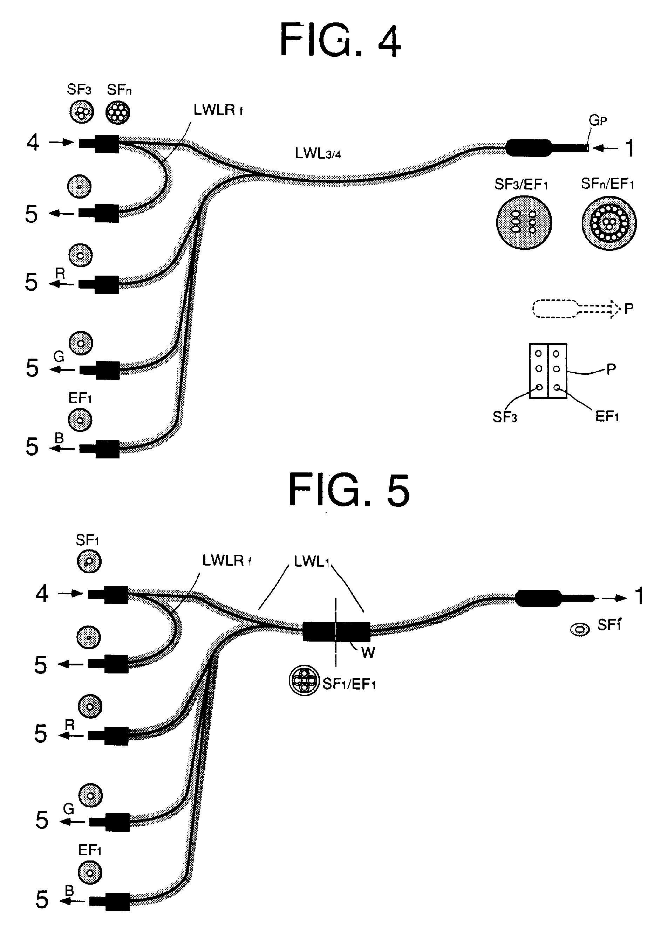

Eine ähnliche LWL-Anordnung ist in Figur 4 für Remission gezeigt. Der in einer Öffnung 2 an die Küvette 1 angeschlossene LWL 3/4 kann entsprechend einem ein- oder mehrkanaligen Betrieb eine oder mehrere Sendefasern $SF_3$ und pro Kanal eine Empfangsfaser $EF_1$ enthalten. Die Enden der Fasern sind mit einem transparenten Flächenelement, beispielsweise einer 400 bis 700 µm starken Glasplatte Gp, abgeschlossen, wobei die Endabschnitte der Sendefasern unter einem Winkel von 45° zum Flächenelement geneigt sind, d.h. die Lichteinstrahlung erfolgt unter 45°, die Detektion unter einem Winkel von 0°, d.h. senkrecht zur Grenzfläche. Die Enden der Sende- und Empfangsfasern sind dabei paarweise in Reihe angeordnet (unsymmetrische Anordnung).

Eine vorteilhafte Variante dieser Anordnung besteht in einer konzentrischen Verteilung vieler Sendefasern $SF_n$ auf einem 45° Kegelstumpfmantel um das bzw. die Enden der Empfangsfasern $EF_1$ (symmetrische Anordnung).

In einer Anordnung für gedämpfte Totalreflexion (ATR-Technik) sind die Enden der Fasern mit einem Prisma P entsprechend dem Strahlengang der Totalreflexion anstelle des Flächenelementes abgeschlossen (strichlierte Darstellung). Die Enden der Sende- und Empfangsfasern sind wiederum paarweise in Reihe angeordnet, jedoch ohne Neigung der Endabschnitte der Sendefasern.

Eine weitere Remissionsanordnung (Figur 5) entsteht, wenn man eine Sendefaser $SF_1$ und 3 Empfangsfasern $EF_1$ nicht senkrecht auf das Flächenelement Gp stoßen läßt, sondern auf eine dickere, ca. 3 m lange Faser $SF_1'$, so daß sich an dieser Übergangsstelle eine Faserweiche W bildet. Das küvettenseitige Ende der dickeren Faser ist um 25° abgeschrägt, d.h. der Winkel zur Faserachse beträgt nicht 90°, sondern 65°, um den Endreflex auszublenden.

Die Einsatzmöglichkeiten der photometrischen Einrichtung nach der Erfindung sind vielfältig; z.B. zur Bestimmung der Farbe von Suspensionen oder der Größe der darin verteilten Feststoffpartikel oder der Feststoffkonzentration. Dabei können diese Messungen auch gleichzeitig durchgeführt werden. Dadurch ist es möglich, Produktionsprozesse mit dispersen Phasen laufend zu überwachen, Führungsgrößen für eine Prozeßregelung zu erhalten und die Qualität der dabei hergestellten Feststoffe vorzubestimmen.

EP 0 472 899 B1

**Patentansprüche**

1. Photometrische Einrichtung zur Messung des Dämpfungsgrades bei der Lichtausbreitung in dispersen Systemen, bestehend aus einer durchströmbaren Küvette (1) für die zu untersuchende Probe mit mindestens einer seitlichen Öffnung (2) zum optischen Anschluß mindestens eines Lichtwellenleiters (LWL) einer von einer Lichtquelle (4) in das Innere der Küvette und von dort zu einem Lichtdetektor (5) geführten Lichtwellenleiterverbindung an das Innere der Küvette zur Erzeugung eines Meßsignals, wobei der Lichtwellenleiter (LWL) durch die seitliche Öffnung (2) unmittelbar in das Innere der Küvette (1) ragt, und aus einer direkten Lichtwellenleiterverbindung (LWL $R_f$) zur Erzeugung eines Referenzsignals sowie aus einem an den Lichtdetektor (5) angeschlossenen Auswertegerät (8), wobei das System aus Lichtquelle, Lichtdetektor und Auswertegerät nicht gepulst ist, dadurch gekennzeichnet, daß der Lichtdetektor (5) ein zweistufiger Verstärker (OP1, OP2) ist, dessen Eingang mit PIN-Dioden (6) als Empfänger für die Lichtwellenleiter-Signale verbunden ist, wobei die erste Verstärkerstufe (OP1) ein bis zu einem sehr hohen Gegenkopplungswiderstand umschaltbares Gegenkopplungsnetzwerk und die zweite Verstärkerstufe (OP2) ein den Frequenzgang mittels verschiedener zuschaltbarer Kapazitäten (C) begrenzendes Gegenkopplungsnetzwerk aufweist, so daß eine Empfindlichkeit bis zu 20 pW/V und ein Rauschanteil kleiner 1 mV schaltbar ist bei 0 bis 13V Ausgangsspannung.

2. Photometrische Einrichtung nach Anspruch 1, dadurch gekennzeichnet, daß die über die Küvette (1) geführte Lichtwellenleiterverbindung empfangsseitig mehrkanalig ausgeführt ist und die den einzelnen Kanälen zugeordneten Empfänger (6) wellenlängenselektive Empfindlichkeiten besitzen.

3. Photometrische Einrichtung nach Anspruch 1 und 2, dadurch gekennzeichnet, daß in einer Transmissionsanordnung der Lichtwellenleiterverbindung an die Küvette (1) ein senderseitiger Lichtwellenleiter (LWL 1) und diesem gegenüber ein empfängerseitiger Lichtwellenleiter (LWL 2) angeschlossen sind.

4. Photometrische Einrichtung nach Anspruch 1 und 2, dadurch gekennzeichnet, daß in einer Quasirückstreuanordnung der Lichtwellenleiterverbindung an die Küvette (1) ein Lichtwellenleiter (LWL 3) mit einer oder mehreren Sendefasern ($SF_1$, $SF_3$) und einer oder mehreren Empfängerfasern ($EF_1$, $EF_2$) angeschlossen ist.

5. Photometrische Einrichtung nach Anspruch 4, dadurch gekennzeichnet, daß die küvettenseitigen Enden der Sende- und Empfängerfasern ($SF_3$, $EF_1$) paarweise nebeneinander angeordnet und Cladding und Kern der Faserenden durch Anschleifen bis zu deren Mitte abgetragen sind, so daß die dabei entstandenen quasitangentialen Schleifflächen unter Zwischenlage eines sehr dünnen Metallplättchens paarweise anliegen.

6. Photometrische Einrichtung nach Anspruch 1 und 2, dadurch gekennzeichnet, daß in einer Remissionsanordnung der Lichtwellenleiterverbindung an die Küvette (1) ein Lichtwellenleiter (LWL 3/4) mit einer oder mehreren Sendefasern (SF) und Empfängerfasern (EF) angeschlossen ist und die Faserenden mit einem transparenten Flächenelement ($G_p$) abgeschlossen sind, wobei die Endabschnitte der Sendefasern (SF) unter einem Winkel von 45° zum Flächenelement geneigt sind.

7. Photometrische Einrichtung nach Anspruch 6, dadurch gekennzeichnet, daß die Enden vieler Sendefasern ($SF_n$) konzentrisch auf einem 45° Kegelstumpfmantel um das bzw. die Enden der Empfängerfasern ($EF_1$) angeordnet sind.

8. Photometrische Einrichtung nach Anspruch 1 und 2, dadurch gekennzeichnet, daß in einer Remissionsanordnung der Lichtwellenleiterverbindung an die Küvette (1) ein Lichtwellenleiter (LWL 1) mit einer Faser ($SF_1$) angeschlossen ist, deren Endfläche unter einem Winkel von 25° zur Vertikalen angeschliffen ist, und die Empfängerfaser bzw. -fasern ($EF_1$) mittels einer optischen Weiche (W) ausgekoppelt sind.

9. Photometrische Einrichtung nach Anspruch 1, dadurch gekennzeichnet, daß in einer Anordnung für gedämpfte Totalreflexion (ATR) der Lichtwellenleiterverbindung an die Küvette (1) ein Lichtwellenleiter (LWL 3/4) mit mehreren, in jeweils einer Reihe angeordneten Sendefasern ($SF_3$) und Empfängerfasern ($EF_1$) angeschlossen ist und die beiden Faserreihen an ihren Enden mit einem Prisma (P) entsprechend dem Strahlengang der Totalreflexion abgeschlossen sind.

10. Photometrische Einrichtung nach Anspruch 1 bis 9, dadurch gekennzeichnet, daß die den einzelnen Empfangskanälen zugeordneten Empfänger (6) des Lichtdetektors (5) PIN-Dioden mit aufgedampften Interferenzfiltern für unterschiedliche Lichtwellenlängen sind.

## Claims

1. A photometric instrument for measuring the degree of attenuation in the propagation of light in disperse systems, comprising a through-flow cell (1) for the sample to be measured, having one or more lateral apertures (2) for optical coupling of one or more optical waveguides (OWGs) of an optical waveguide connection between a light source (4) into the interior of the cell and from there to a light detector (5), to the interior of the cell for producing a measurement signal, the optical waveguide (OWG) projecting through the lateral aperture (Z) directly into the interior of the cell (1), and comprising a direct optical waveguide connection (OWG $R_f$) for producing a reference signal and an evaluation unit (8) connected to the light detector (5) the system comprising the light source, light detector and evaluation unit not being pulsed, wherein the light detector (5) is a two-stage amplifier (OP1, OP2) whose input is connected to PIN diodes (6) as receivers for the optical waveguide signals, the first amplifier stage (OP1) having a negative feedback network which can be switched over up to a very hgih impedance resistance, and the second amplifier stage (OP2) having a negative feedback network which limits the frequency response by means at various capacitances (C) which can be connected into the circuit, so that a sensitivity of up to 20pW/V and a noise level of less than 1mV can be achieved at an import voltage of from 0 to 13V.

2. A photometric instrument as claimed in claim 1, wherein the optical waveguide connection via the cell (1) is, on the receiving side, in the form of a multichannel connection, and the receivers (6) assigned to the individual channels have wavelength-selective sensitivities.

3. A photometric instrument as claimed in claim 1 or 2, wherein, in a transmission arrangement of the optical waveguide connection, a transmitter-side optical waveguide (OWG 1) and a corresponding receiver-side optical waveguide (OWG 2) are coupled to the cell (1).

4. A photometric instrument as claimed in claim 1 or 2, wherein, in a quasi-backscattering arrangement of the optical waveguide connection, an optical waveguide (OWG 3) having one or more transmitter fibers ($TF_1$, $TF_3$) and one or more receiver fibers ($RF_1$, $RF_2$) is coupled to the cell (1).

5. A photometric instrument as claimed in claim 4, wherein the cell-side ends of the transmitter and receiver fibers ($TF_3$, $RF_1$) are arranged alongside one another in pairs, and the cladding and core of the fiber ends have been ground down to their center, so that the resultant quasi-tangential ground surfaces are in contact with one another in pairs with a very thin metal plate between them.

6. A photometric instrument as claimed in claim 1 or 2, wherein, in a remission arrangement of the optical waveguide connection, an optical waveguide (OWG 3/4) having one or more transmitter fibers (TF) and receiver fibers (RF) is coupled to the cell (1), and the fiber ends are terminated by a transparent flat element (Gp), the end sections of the transmitter fibers (TF) being tilted at an angle of 45° to the flat element.

7. A photometric instrument as claimed in claim 6, wherein the ends of a large number of transmitter fibers ($TF_n$) are arranged concentrically on a 45° truncated cone sheath around the end or ends of the receiver fibers ($RF_1$).

8. A photometric instrument as claimed in claim 1 or 2, wherein, in a remission arrangement of the optical waveguide connection, an optical waveguide (OWG 1) having a fiber ($TF_1$) whose end face is ground at an angle of 25° to the vertical is coupled to the cell (1), and the receiver fiber or fibers ($RF_1$) are decoupled by means of an optical filter (F).

9. A photometric instrument as claimed in claim 1, wherein, in an arrangement for attenuated total reflection (ATR) of the optical waveguide connection, an optical waveguide (OWG 3/4) having a plurality of transmitter fibers ($TF_3$) and receiver fibers ($RF_1$), in each case arranged in series, is coupled to the cell (1), and the two fiber series are terminated at their ends by a prism (P) corresponding to the total-reflection ray path.

10. A photometric instrument as claimed in claim 1 or 2 or 3 or 4 or 5 or 6 or 7 or 8 or 9, wherein the receivers (6) of the light detector (5) which are assigned to the individual receiving channels are PIN diodes having vapor-deposited interference filters for different wavelengths.

**Revendications**

1. Dispositif photométrique pour la mesure du degré d'amortissement lors de la propagation de la lumière dans des systèmes à dispersion, composé d'une cuvette (1) pouvant être traversée par un courant, pour placer l'échantillon à examiner, avec au moins une ouverture latérale (2), pour effectuer le raccordement optique d'au moins un guide d'ondes lumineuses (LWL) d'une liaison de guide d'ondes lumineuses guidée depuis une source lumineuse (4), à l'intérieur de la cuvette, et, de là, à un photodétecteur (5), la liaison se faisant, vis-à-vis de l'intérieur de la cuvette, en vue de produire un signal de mesure, le guide d'ondes lumineuses (LWL) pénétrant par l'ouverture latérale (2) directement à l'intérieur de la cuvette (1), et le dispositif étant également composé d'une liaison de guide d'ondes lumineuses directe (LWL $R_f$) pour produire un signal de référence, ainsi que d'un appareil d'évaluation (8) raccordé au photodétecteur (5), le système composé de la source lumineuse, du photodétecteur et de l'appareil d'exploitation n'étant pas pulsé, caractérisé en ce que le photodétecteur (5) est un amplificateur à deux étages (OP1, OP2), dont l'entrée est liée à des diodes PIN (6), à titre de récepteur des signaux de guide d'ondes lumineuses, le premier étage d'amplificateur (OP1) étant un réseau à bouclage de réaction, pouvant être commuté jusqu'à présenter une résistance de bouclage de réaction très élevée, et le deuxième étage d'amplificateur (OP2) présentant un réseau à bouclage de réaction limitant la plage de fréquences au moyen de différentes capacités (C) pouvant être mises en circuit, de manière à obtenir une sensibilité allant jusqu'à 20 pW/V et un taux de bruit inférieur à 1 mV, pour une tension de sortie de l'ordre de 0 à 13 V.

2. Dispositif photométrique selon la revendication 1, caractérisé en ce que la liaison à guide d'ondes lumineuses guidée sur la cuvette (1) est réalisée avec plusieurs canaux côté réception et les récepteurs (6) associés aux différents canaux ayant des sensibilités sélectives, dépendant des longueurs d'onde.

3. Dispositif photométrique selon les revendications 1 et 2, caractérisé en ce que, dans un dispositif de transmission de la liaison de guide d'ondes lumineuses à la cuvette (1), sont raccordés un guide d'ondes lumineuses (LWL 1), situé côté émetteur, et un guide d'ondes lumineuses (LWL 2), situé côté récepteur et placé en regard de celui-ci.

4. Dispositif photométrique selon les revendications 1 et 2, caractérisé en ce que, dans un dispositif à quasi-rétrodiffusion de la liaison à guide d'ondes lumineuses à une cuvette (1), un guide d'ondes lumineuses (LWL 3) est raccordé à une ou plusieurs fibres émettrices ($SF_1$, $SF_3$) et à une ou plusieurs fibres réceptrices ($EF_1$, $EF_2$)

5. Dispositif photométrique selon la revendication 4, caractérisé en ce que les extrémités, situées côté cuvette, des fibres émettrice et réceptrice ($SF_3$, $EF_1$) sont disposées les unes à côtés des autres par paires, et la gaine et le noyau des extrémités de fibres étant enlevés par meulage, jusqu'à leur centre, de sorte que les faces meulées quasi-tangentielles produites viennent en appui entre elles, par paires, avec interposition d'une très mince plaquette métallique.

6. Dispositif photométrique selon les revendications 1 et 2, caractérisé en ce que, dans un dispositif à réflexion diffuse de la liaison à guide d'ondes lumineuses sur la cuvette (1), un guide d'ondes lumineuses (LWL 3/4) est raccordé à une ou plusieurs fibres émettrices (SF) et fibres réceptrices (EF), et les extrémités de fibres étant délimitées par un élément de surface ($G_p$) transparent, les sections d'extrémité des fibres émettrices (SF) étant inclinées sous un angle de 45° par rapport aux éléments de surface.

7. Dispositif photométrique selon la revendication 6, caractérisé en ce que les extrémités de la pluralité de fibres émettrices ($SF_n$) sont disposées concentriquement sur une enveloppe tronconique dont l'angle est de 45° autour de la ou des extrémités des fibres réceptrices ($EF_1$).

8. Dispositif photométrique selon les revendications 1 et 2, caractérisé en ce que dans un dispositif à réflexion diffuse de la liaison à guide d'ondes lumineuses, à la cuvette 1 est raccordé un guide d'ondes lumineuses (LWL 1) avec une fibre ($SF_1$), dont la face est meulée sous un angle de 25° par rapport à la verticale et la fibre réceptrice, respectivement les fibres réceptrices ($EF_1$), sont découplées au moyen d'une aiguille optique (W).

9. Dispositif photométrique selon la revendication 1, caractérisé en ce que, dans un dispositif destiné à produire une réflexion totale (ATR) amortie de la liaison à guide d'ondes lumineuses, un guide d'ondes lumineuses (LWL 3/4) ayant plusieurs fibres émettrices ($SF_3$) et fibres réceptrices ($EF_1$) chaque fois disposées en rangées est raccordé à la cuvette (1), et les deux rangées de fibres étant délimitées à leurs extrémités avec un prisme (P), de manière correspondante au trajet du rayon de réflexion totale.

10. Dispositif photométrique selon les revendications 1 à 9, caractérisé en ce que les récepteurs (6), associés aux différents canaux récepteurs, du photodétecteur (5) sont des diodes PIN avec des filtres à interférence destinés à différentes longueurs d'onde lumineuse et réalisés par métallisation sous vide.

FIG. 1

EP 0 472 899 B1

# FIG. 2

# FIG. 3

# FIG. 4

# FIG. 5

# FIG. 6

# FIG. 7